# FASCICULE DE BREVET EUROPEEN

(11) **EP 2 107 391 B1**
(45) Date de publication et mention de la délivrance du brevet: **27.04.2011**
(21) Numéro de dépôt: 09154109.4
(22) Date de dépôt: 02.03.2009
(51) Int. Cl.: G01S 13/91, G01S 7/40, G01S 13/44

(54) **Procédé de détection avec un radar d'une cible connue susceptible d'être sensiblement disposée à une hauteur donnée, à proximité d'autres cibles disposées sensiblement à la même hauteur**
Radarerkennungsverfahren eines bekannten Ziels, das sich auf einer bestimmten Höhe befindet und zwar in der Nähe anderer Ziele, die sich auf derselben Höhe befinden.
Method for using radar to detect a known target capable of being arranged roughly at a given height, near other targets arranged roughly at the same height

(30) Priorité: 01.04.2008 FR 0801787
(43) Date de publication de la demande: 07.10.2009
(73) Titulaire: THALES, 92200 Neuilly-sur-Seine (FR)
(72) Inventeur: Cornic, Pascal, 29200 Brest (FR); Barraux, Eric, 29200 Brest (FR); Garrec, Patrick, 33700 Mérignac (FR)
(74) Mandataire: Lucas, Laurent Jacques

(56) Documents cités:
- EP-A- 0 947 852
- FR-A- 2 878 336
- FR-A- 2 894 347
- FR-A- 2 901 613
- US-A- 2 924 819
- US-A- 4 316 191
- US-A- 5 907 568
- ECKERSTEN C ET AL: "Radar tracking of sea-skimmers, an implementation of 'complex angle'" RADAR 92. INTERNATIONAL CONFERENCE BRIGHTON, UK, LONDON, UK,IEE, UK, 1 janvier 1992 (1992-01-01), pages 46-49, XP006514747 ISBN: 978-0-85296-553-5

## Description

La présente invention concerne un procédé de détection avec un radar d'une cible connue susceptible d'être sensiblement disposée à une hauteur donnée à proximité d'autres cibles, elles aussi disposées sensiblement à la même hauteur. Elle s'applique par exemple dans le domaine des systèmes d'assistance au décollage et à l'atterrissage des aéronefs. Dans ce cas, la cible connue est un aéronef sur une piste d'atterrissage et les autres cibles peuvent être d'autres aéronefs au sol, des batiments ou encore des équipements fixes ou mobiles placés au bord de la piste.

Des systèmes au sol permettent d'assister les aéronefs au décollage et à l'atterrissage. Eventuellement, ils peuvent même lui permettre de décoller ou d'atterrir de manière totalement automatique, le système prenant en charge l'ensemble des opérations depuis le sol. Au décollage, il faut détecter et localiser précisément l'aéronef à l'arrêt sur la piste d'atterrissage, pour pouvoir ensuite le suivre jusqu'à ce qu'il quitte effectivement la piste. Mais détecter un aéronef immobile posé sur le sol et déterminer avec précision sa position n'est pas sans poser de nombreuses difficultés. Notamment, l'aéronef étant immobile, un radar classique ne peut pas exploiter le décalage Doppler pour discriminer, dans une même cellule de résolution distance, des échos venant de l'aéronef et des échos parasites venant d'autres cibles susceptibles de se trouver à proximité. Il s'agit là de l'un des problèmes techniques que la présente invention se propose de résoudre.

Des solutions actuelles utilisent un radar à faisceau très étroit en ondes millimétriques, offrant une très haute résolution en distance. Mais un tel radar est coûteux et la dimension de l'antenne nécessaire pour isoler une cible d'intérêt dans le faisceau peut être rédhibitoire. De plus, les échos parasites peuvent empêcher la détection lorsque le rapport signal à bruit est trop faible. Par ailleurs, les radars, qu'ils soient millimétriques ou autres, sont sensibles aux réflexions, en particulier sur le sol. Les réflexions peuvent générer un creux de frange qui empêche la détection et la localisation. D'autres systèmes utilisent un faisceau laser. Mais les capacités de pointage d'un faisceau laser sont très fortement perturbées par temps de brouillard. Dans les deux cas, radar à faisceau en ondes millimétriques ou faisceau laser, de coûteux moyens de balayage du faisceau sont nécessaires, ainsi que de coûteux moyens de pointage extrêmement précis du faisceau par rapport à la piste. D'autres solutions actuelles utilisent un système de positionnement par triangulation satellitaire du type « Global Positioning System » (GPS) ou « differential Global Positioning System » (DGPS). Mais ces systèmes de positionnement peuvent être facilement perturbés par les réflexions du sol, notamment pour la mesure de l'altitude, et sont facilement brouillables. D'autres solutions actuelles font appel à un transpondeur à bord de l'aéronef. Mais une mesure de distance précise nécessite alors une électronique coûteuse.

La présente demande de brevet fait suite à d'autres demandes déposées par la demanderesse pour des inventions connexes à la présente invention. Il s'agit d'une part de la demande publiée en France sous le numéro FR2878336A1, qui concerne un procédé et un dispositif de localisation d'un aéronef, notamment pour son guidage automatique en phase d'atterrissage. Cette demande enseigne essentiellement comment utiliser un radar à bas coût, une balise émettrice embarquée et une balise émettrice au sol pour localiser un aéronef en phase d'approche d'une piste d'atterrissage. Il s'agit d'autre part de la demande déposée en France en 2007 sous le numéro 0701926, qui concerne une antenne réseau pour localisation à élévation basse. Cette demande enseigne essentiellement comment mesurer par interférométrie, en exploitant les réflexions sur le sol, les angles d'azimut et d'élévation d'une balise émettant un signal continu (CW) embarquée à bord d'un aéronef en phase d'approche d'une piste d'atterrissage. Dans la suite de la demande, le terme « élévation » sera utilisé pour désigner l'angle d'élévation, également appelé « angle de site ».

La demande de brevet EP 0 947 852 A divulgue un radar permettant d'effectuer électriquement un balayage, le radar étant particulièrement adapté à un usage à bord d'un véhicule.

La présente invention a notamment pour but de pallier les inconvénients précités des solutions actuelles pour détecter et localiser précisément un aéronef à l'arrêt en bout de piste avant le décollage. Pour cela, la présente invention propose d'exploiter le fait que dans un dispositif selon la demande FR2878336A1, lorsque l'aéronef se trouve en bout de piste prêt pour le décollage, la position relative par rapport au radar de la balise embarquée dans l'aéronef est connue *a priori,* ainsi que sa fréquence d'émission. Notamment, l'élévation de la balise par rapport au radar est connue *a priori* et il est peu probable que cette élévation soit la même que d'autres sources d'émission à la même fréquence situées au même azimut par rapport au radar. La présente invention propose ainsi d'exploiter cette élévation connue *a priori* pour discriminer, dans une même cellule de résolution distance, l'aéronef portant la balise des émissions parasites, ceci en mesurant l'azimut et l'élévation conformément à la demande française de numéro de dépôt 0701926. A cet effet, l'invention a pour objet un procédé de détection avec un radar d'une cible connue susceptible d'être sensiblement disposée à une hauteur donnée H2 à proximité d'autres cibles elles aussi disposées sensiblement à la hauteur H2. Une première phase de détection de la cible connue est réalisée en effectuant un balayage en azimut. Lorsque la cible connue a été détectée à une certaine distance Di selon un certain angle d'azimut θaz, une deuxième phase de détection est réalisée selon ledit angle d'azimut θaz et selon un angle d'élévation θEL correspondant à celui d'un objet situé à ladite distance Di à la hauteur H2. La cible est alors réputée détectée si elle est détectée selon l'angle d'élévation θEL à une distance D sensiblement égale à la distance Di. La deuxième phase de détection permet donc de confirmer ou d'infirmer la détection de la cible connue selon l'angle d'azimut θaz.

Avantageusement, les phases de détection peuvent inclure des traitements d'interférométrie ou des traitements doppler.

Par exemple, la cible connue peut être une balise émettant un signal. La balise peut être portée à la hauteur H2 par un aéronef sensiblement situé sur l'axe longitudinal A d'une piste d'atterrissage. Le radar peut comporter une antenne de réception capable de détecter le signal émis par la balise. L'antenne peut être disposée à une distance latérale donnée Dlat par rapport à l'axe A. Lorsque la balise a été détectée à la distance Di selon l'angle d'azimut θaz, la deuxième phase de détection peut être réalisée selon ledit angle d'azimut θaz et selon un angle d'élévation θEL correspondant à celui d'un objet situé sur l'axe A à la hauteur H2.

Par exemple, la balise peut émetttre un signal continu à une fréquence donnée.

Dans un mode de réalisation préférentiel, une balise émettrice de référence émettant un signal à une fréquence différente du signal émis par la balise (2) portée par l'aéronef peut permettre de calibrer l'antenne de réception.

Avantageusement, la balise émettrice de référence peut être disposée à la hauteur H2, à la distance latérale Dlat par rapport à l'axe A, sensiblement alignée avec une position à laquelle est susceptible d'être situé l'aéronef portant la balise.

La présente invention a également pour objet un procédé de localisation avec un radar d'une balise émettant un signal. La balise est portée à une hauteur donnée H2 par un aéronef sensiblement situé sur l'axe longitudinal A d'une piste d'atterrissage, à proximité de cibles elles aussi disposées sensiblement à la hauteur H2. Le radar comporte une antenne de réception capable de détecter le signal émis par la balise. L'antenne est disposée à une distance latérale donnée Dlat par rapport à l'axe A. Une première phase de détection de la balise est réalisée en effectuant un balayage en azimut. Lorsque la balise a été détectée à une certaine distance Di selon un certain angle d'azimut θaz, une deuxième phase de détection est réalisée selon ledit angle d'azimut θaz et selon un angle d'élévation θEL correspondant à celui d'un objet situé sur l'axe A à la hauteur H2. Lorsque la balise a été détectée à une certaine distance D selon l'angle d'élévation θEL, la position de la balise (2) est réputée être définie par l'angle d'azimut θaz et la distance D si la distance D est sensiblement égale à la distance Di.

L'invention a encore pour principaux avantages qu'elle peut être mise en oeuvre à partir d'un dispositif à bas coût, comme celui décrit dans les deux demandes précitées par exemple. En effet, un radar à antenne passive et à faisceau large et fixe suffit, aucun dispositif mécanique d'asservissement de l'antenne n'est nécessaire. De telles antennes ont une excellente tolérance à la panne, ce qui peut également diminuer les coûts de maintenance. L'antenne peut par ailleurs exploiter un simple signal continu émis par une balise bas coût portée par l'aéronef.

D'autres caractéristiques et avantages de l'invention apparaîtront à l'aide de la description qui suit faite en regard de dessins annexés qui représentent :
- la figure 1, par une vue de dessus, un exemple de mise en oeuvre de la présente invention ;
- la figure 2, par une vue de profil, le même exemple de mise en oeuvre de la présente invention.

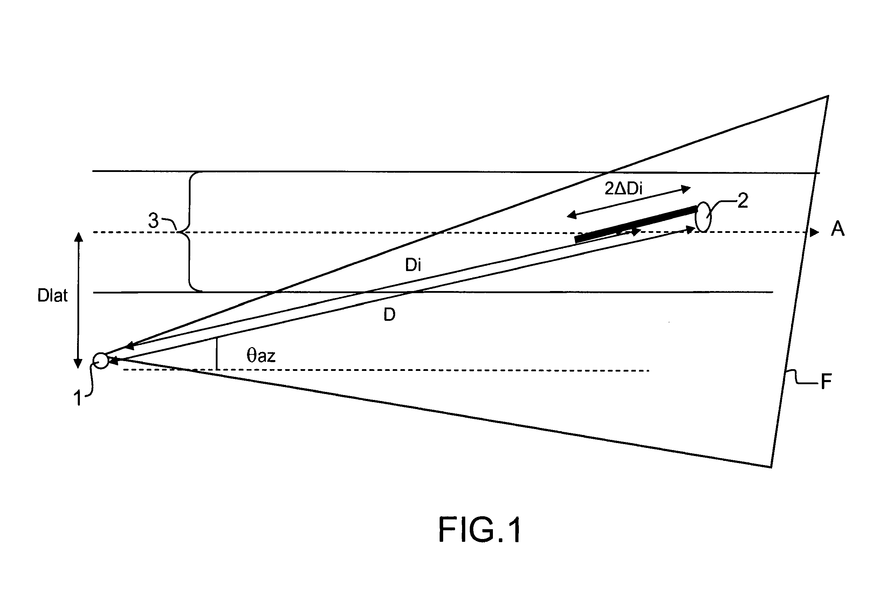

La figure 1 illustre par une vue de dessus un exemple de mise en oeuvre de la présente invention. Un radar 1 comporte une antenne réseau à faisceau F large et fixe. Dans le présent exemple de réalisation, le radar 1 est analogue au radar décrit dans les deux demandes précitées. Il est donc capable de mesurer avec précision l'azimut et l'élévation d'une cible au ras du sol. Le radar 1 est placé au bord d'une piste d'atterrissage 3 avec un écart latéral Dlat donné par rapport l'axe A de la piste 3. Par exemple, une balise 2 émettant un signal CW à une fréquence connue peut être embarquée à bord d'un aéronef non représenté sur la figure 1, l'aéronef étant immobile au bout de la piste 3, prêt à décoller. Avantageusement, dans ce mode de réalisation, le radar 1 est capable de mesurer précisément un angle d'azimut θaz du radar 1 à la balise 2 par interférométrie. Dans cette situation d'attente au point de décollage, l'aéronef portant la balise 2 et donc la balise 2 elle-même sont sensiblement sur l'axe A. Par rapport au radar 1, la balise 2 est située à une distance au sol D à l'azimut θaz. L'axe radar-balise, orienté selon l'azimut θaz, intersecte l'axe A à une distance Di du radar 1. La distance Di est donnée par θaz=Dlat/Di. Dlat étant connu, la distance Di peut être déduite avec une incertitude +/- ΔDi liée à une erreur Δθaz de mesure sur l'azimut. Il peut être déduit que le point d'intersection entre l'axe radar-balise et l'axe A se trouve dans une zone d'incertitude de longueur 2ΔDi comme illustré par la figure 1.

Le radar 1, de même que tout radar aux performances analogues à celles du radar décrit dans les deux demandes précitées, est capable de mesurer l'azimut θaz avec précision. En effet, avec un tel radar l'erreur Δθaz est de l'ordre de +/-1 milliradian seulement. Ainsi, la position du point d'intersection entre l'axe radar-balise et l'axe A peut également être calculée avec une grande précision. Par exemple, si la distance D du radar 1 à la balise 2 est de l'ordre de 600 mètres, alors pour un écart latéral Dlat de 50 mètres, l'angle θaz mesuré par le radar 1 est de 83 milliradians. Du coup, la distance Di calculée est de 602 mètres. Une erreur de mesure de +/- 1 milliradian sur l'angle θaz conduit dans ce cas à une erreur de +/- 7 mètres sur Di. La zone d'incertitude ne fait donc pas moins de 14 mètres en longueur ! Il apparaît nécessaire d'utiliser un critère supplémentaire pour confirmer que la balise 2 se trouve sensiblement sur l'axe A.

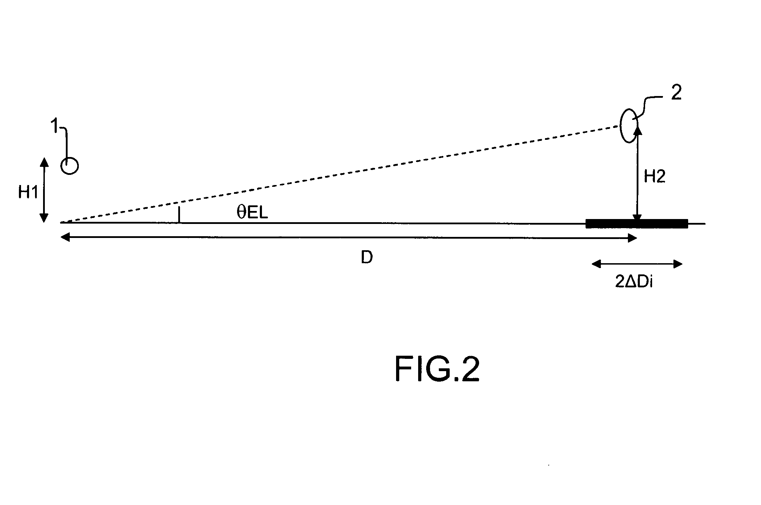

La figure 2 illustre par une vue de profil le même exemple de mise en oeuvre de la présente invention que la figure 1. L'hypothèse est faite que la balise 2 est située au point d'intersection entre l'axe radar-balise et l'axe A, c'est-à-dire à la distance Di de 602 m du radar 1 et à l'azimut θaz de 83 milliradians comme calculé précédemment. Le radar 1, de même que tout radar aux performances analogues à celles du radar décrit dans les deux demandes précitées, est capable, malgré le fait que la balise 2 est au ras du sol, de mesurer précisément un angle d'élévation θEL de la balise 2 par rapport au pied du radar 1. Pour cela, le radar 1 exploite par interférométrie les réflexions sur le sol du signal CW émis par la balise 2. La balise 2 se trouvant sur l'aéronef à une hauteur d'installation H2 par rapport au sol, H2 étant connue et étant de l'ordre du mètre, le radar 1 se trouvant à une hauteur d'installation H1 par rapport au sol, H1 étant connue et étant de l'ordre du mètre également, et la distance D entre le radar 1 et le point de décollage étant de l'ordre de 600 m, alors l'angle d'élévation θEL est de l'ordre de 1 milliradian seulement. Avantageusement, en mesurant la fréquence de modulation d'amplitude sur l'antenne du radar 1, le procédé d'interférométrie décrit dans la demande française précitée de numéro de dépôt 0701926 permet de mesurer avec une précision suffisante une si petite valeur de θEL. La hauteur H2 étant connue, il est alors facile de déduire la distance D du radar 1 à la balise 2. La distance D est donnée par la relation θEL= H2/D, avec une incertitude +/- ΔD liée à une erreur ΔθEL de mesure sur l'élévation. La balise 2 se trouve donc dans une zone d'incertitude de longueur 2ΔD longitudinale à la piste, comme illustré par la figure 2.

Si la distance D calculée à partir de la mesure de l'élévation θEL est sensiblement égale à la distance Di calculée à partir de la mesure de l'azimut θaz, c'est-à-dire si D et Di sont égales à l'incertitude de mesure près ou encore si D est compris entre Di-ΔDi-ΔD et Di+ΔDi+ΔD, alors la balise 2 est réputée détectée à la position définie à partir du radar 1 par l'azimut θaz et la distance D.

Si la distance D calculée n'est pas comprise entre Di-ΔDi-ΔD et Di+ΔDi+ΔD, alors la balise 2 n'est pas réputée détectée.

La mesure de l'élévation θEL fournit donc un critère supplémentaire permettant de confirmer ou d'infirmer que c'est bien la balise 2 qui a été détectée à l'azimut 6az. En fait, la mesure de l'élévation θEL permet de discriminer les cibles situées à la hauteur H2 par rapport au sol des cibles qui ne le sont pas. En effet, l'élévation θEL de la balise 2 par rapport au radar 1 est connue *a priori* et il est peu probable que cette élévation soit la même que celles des autres cibles situées à proximité et au même azimut θaz, Vu la précision de mesure de l'élévation θEL par le radar 1, il est extrêmement peu probable qu'une autre balise que la balise 2 puisse passer avec succès le test de confirmation, sauf à imaginer qu'un autre aéronef se trouve littéralement collé à l'aéronef portant la balise 2, ce qui en pratique est quasiment impossible dans une zone de décollage. Par ailleurs, cette situation est rigoureusement impossible si deux aéronefs distints portent des balises émettant à des fréquences distictes et/ou des codes distincts, ce qui est le cas dans le dispositif selon la demande FR2878336A1.

Il faut comprendre que l'utilisation du radar 1 identique au radar décrit dans les deux demandes précitées n'est proposée qu'à titre d'exemple. En effet, n'importe quel autre radar capable de mesurer avec précision l'azimut et l'élévation d'une cible au ras du sol peut également être utilisé pour mettre en oeuvre la présente invention. Quant à la valeur de la hauteur d'installation H2 de la balise 2, elle est fonction du type de l'aéronef portant la balise 2. Le dispositif des figures 1 et 2 doit donc être paramétré en fonction du type d'aéronef, qui fait varier la hauteur d'installation H2.

Dans un mode de réalisation préférentiel, une balise émettrice de référence, similaire à la balise 2 mais émettant à une fréquence différente, peut être disposée au bord de la piste 3. Idéalement, cette balise de référence peut être disposée au bord de la piste 3, alignée avec le point théorique de décollage. Située à la distance Dlat de l'axe A, elle peut permettre d'améliorer la précision de mesure de l'azimut θaz. Située à la hauteur H2, elle peut permettre d'améliorer la précision de mesure de l'élévation θEL. La balise de référence constitue alors un excellent dispositif d'auto-calibrage à très faible coût. En effet, tout biais sur la mesure de la position de la balise 2 est annulé par le biais sur la mesure de la position de la balise de référence. Le dispositif des figures 1 et 2 devient alors insensible aux variations de température par exemple.

Dans un autre mode de réalisation, le radar 1 peut avantageusement exploiter le décalage doppler. Il est alors capable de détecter par écho de peau l'aéronef portant la balise 2 lorsqu'il roule sur la piste 3. Mais tant que l'aéronef portant la balise 2 est immobile, le traitement doppler est inefficace et donc incapable de discriminer des cibles fixes dès lors qu'elles sont vues dans la même cellule de résolution distance correspondant sensiblement à la distance D. Cependant, avantageusement, si l'aéronef comporte une hélice, le traitement doppler permet de discriminer ledit aéronef prêt au décollage des autres aéronefs stationnant à proximité et dont les éventuelles hélices sont immobiles.

L'invention décrite précédemment a encore pour principaux avantages qu'elle ne nécessite pas de précautions particulières relatives au positionnement du radar vis à vis de la piste. En utilisant une méthode d'interférométrie, l'invention décrite précédemment est également insensible au positionnement angulaire de l'antenne du radar, le positionnement angulaire de l'antenne pouvant varier avec les rafales de vent. Par ailleurs, de par la simplicité des équipements qu'elle nécessite, l'invention offre un haut niveau de fiabilité, tant au niveau du radar qu'au niveau de la balise. Et dans le cas exceptionnel où la balise tomberait en panne, l'utilisation d'un radar à antenne active peut même fournir une fonction de redondance.

## Revendications

1. Procédé de détection avec un radar (1) sensiblement disposé à une hauteur H1 d'une cible connue (2) susceptible d'être sensiblement disposée à une hauteur donnée H2, à proximité d'autres cibles elles aussi disposées sensiblement à la hauteur H2, comportant :
- une première phase de détection de la cible connue (2) en effectuant un balayage en azimut ;
le procédé étant **caractérisé en ce qu'**il comporte:
- lorsque la cible connue (2) a été détectée à une certaine distance Di selon un certain angle d'azimut θaz, une deuxième phase de détection selon ledit angle d'azimut θaz et selon un angle d'élévation θEL correspondant à celui d'un objet situé à ladite distance Di à la hauteur H2, la cible étant réputée détectée si elle est détectée selon l'angle d'élévation θEL à une distance D sensiblement égale à la distance Di.

2. Procédé selon la revendication 1, **caractérisé en ce que** les phases de détection incluent des traitements d'interférométrie.

3. Procédé selon la revendication 1, **caractérisé en ce que** les phases de détection incluent des traitements doppler.

4. Procédé selon la revendication 1, **caractérisé en ce que** :
- la cible connue est une balise (2) émettant un signal, la balise étant portée à la hauteur H2 par un aéronef sensiblement situé sur l'axe longitudinal A d'une piste d'atterrissage (3) ;
- le radar (1) comporte une antenne de réception capable de détecter le signal émis par la balise (2), l'antenne étant disposée à une distance latérale donnée Dlat par rapport à l'axe A ;
de manière que, lorsque la balise (2) a été détectée à la distance Di selon l'angle d'azimut θaz, la deuxième phase de détection est réalisée selon ledit angle d'azimut θaz et selon un angle d'élévation θEL correspondant à celui d'un objet situé sur l'axe A à la hauteur H2.

5. Procédé selon la revendication 4, **caractérisé en ce que** la balise (2) émet un signal continu à une fréquence donnée.

6. Procédé selon la revendication 5, **caractérisé en ce qu'**une balise émettrice de référence émettant un signal à une fréquence différente du signal émis par la balise (2) portée par l'aéronef permet de calibrer l'antenne.

7. Procédé selon la revendication 6, **caractérisé en ce que** la balise émettrice de référence est disposée :
- à la hauteur H2 ;
- à la distance latérale Dlat par rapport à l'axe A ;
- sensiblement alignée avec une position à laquelle est susceptible d'être situé l'aéronef portant la balise (2).

8. Procédé de localisation avec un radar (1) sensiblement disposé à une hauteur H1 d'une balise (2) émettant un signal, la balise (2) étant portée à une hauteur donnée H2 par un aéronef sensiblement situé sur l'axe longitudinal A d'une piste d'atterrissage (3), à proximité de cibles elles aussi disposées sensiblement à la hauteur H2, le radar (1) comportant une antenne de réception capable de détecter le signal émis par la balise (2), l'antenne étant disposée à une distance latérale donnée Dlat par rapport à l'axe A, comportant :
- une première phase de détection de la balise (2) en effectuant un balayage en azimut ;
le procédé étant **caractérisé en ce qu'**il comporte:
- lorsque la balise (2) a été détectée à une certaine distance Di selon un certain angle d'azimut θaz, une deuxième phase de détection est réalisée selon ledit angle d'azimut θaz et selon un angle d'élévation θEL correspondant à celui d'un objet situé sur l'axe A à la hauteur H2 ;
- lorsque la balise (2) a été détectée à une certaine distance D selon l'angle d'élévation θEL, la position de la balise (2) est réputée être définie par l'angle d'azimut θaz et la distance D si la distance D est sensiblement égale à la distance Di.

## Claims

1. A process for using a radar (1), substantially disposed at a height H1, to detect a known target (2) likely to be substantially disposed at a given height H2, within the vicinity of other targets that are also substantially disposed at the height H2, including:
- a first phase of detecting the known target (2) by performing an azimuth scan;
the process being **characterised in that** it includes:
- when the known target (2) has been detected at a certain distance Di along a certain azimuth angle θaz, a second detection phase along said azimuth angle θaz and along an angle of elevation θEL corresponding to that of an object located at said distance Di at the height H2, the target being considered to be detected if it is detected along an angle of elevation θEL at a distance D substantially equal to the distance Di.

2. The process according to claim 1, **characterised in that** the detection phases include interferometric processing.

3. The process according to claim 1, **characterised in that** the detection phases include Doppler processing.

4. The process according to claim 1, **characterised in that**:
- the known target is a beacon (2) emitting a signal, the beacon being carried to the height H2 by an aircraft substantially located on the longitudinal axis A of a landing runway (3);
- the radar (1) includes a reception antenna capable of detecting the signal emitted by the beacon (2), the antenna being disposed at a given lateral distance Dlat relative to the axis A;
so that, when the beacon (2) has been detected at the distance Di along the azimuth angle θaz, the second detection phase is realised along said azimuth angle θaz and along an angle of elevation θEL corresponding to that of an object located on the axis A at the height H2.

5. The process according to claim 4, **characterised in that** the beacon (2) emits a continuous signal at a given frequency.

6. The process according to claim 5, **characterised in that** a reference emitting beacon emitting a signal at a frequency which differs from that of the signal emitted by the beacon (2) on board the aircraft allows the antenna to be calibrated.

7. The process according to claim 6, **characterised in that** the reference emitting beacon is disposed:
- at the height H2;
- at the lateral distance Dlat relative to the axis A;
- substantially aligned with a position at which the aircraft with the on board beacon (2) is likely to be located.

8. A process for using a radar (1), substantially disposed at a height H1, to locate a beacon (2) emitting a signal, the beacon being carried to a given height H2 by an aircraft substantially located on the longitudinal axis A of a landing runway (3), within the vicinity of targets, which targets are also substantially disposed at the height H2, the radar (1) including a receiving antenna capable of detecting the signal emitted by the beacon (2), the antenna being disposed at a given lateral distance Dlat relative to the axis A, including:
- a first phase of detecting the beacon (2) by performing an azimuth scan;
the process being **characterised in that** it includes:
- when the beacon (2) has been detected at a certain distance Di along a certain azimuth angle θaz, a second detection phase along said azimuth angle θaz and along an angle of elevation θEL corresponding to that of an object located at the axis A at the height H2;
- when the beacon (2) has been detected at a certain distance D along the angle of elevation θEL, the position of the beacon (2) is considered to be defined by the azimuth angle θaz and the distance D if the distance D is substantially equal to the distance Di.

## Patentansprüche

1. Verfahren zum Verwenden eines im Wesentlichen in einer Höhe H1 angeordneten Radars (1) zum Erfassen eines bekannten Ziels (2), das wahrscheinlich im Wesentlichen in einer vorbestimmten Höhe H2 angeordnet ist, in der Nähe von anderen Zielen, die ebenfalls im Wesentlichen in der Höhe H2 angeordnet sind, das Folgendes beinhaltet:
- eine erste Phase des Erfassens des bekannten Ziels (2) durch Ausführen einer Azimutabtastung;
wobei das Verfahren **dadurch gekennzeichnet ist, dass** es Folgendes beinhaltet:
- wenn das bekannte Ziel (2) in einer bestimmten Entfernung Di über einen bestimmten Azimutwinkel θaz erfasst wurde, eine zweite Erfassungsphase über den Azimutwinkel θaz und über einen Höhenwinkel θEL entsprechend dem eines Objekts, das sich in der Entfernung Di in der Höhe H2 befindet, wobei das Ziel als erfasst angesehen wird, wenn es über einen Höhenwinkel θEL in einer Entfernung D erfasst wird, die im Wesentlichen gleich der Entfernung Di ist.

2. Verfahren nach Anspruch 1, **dadurch gekennzeichnet, dass** die Erfassungsphasen interferometrische Verarbeitungen beinhalten.

3. Verfahren nach Anspruch 1, **dadurch gekennzeichnet, dass** die Erfassungsphasen Doppler-Verarbeitungen beinhalten.

4. Verfahren nach Anspruch 1, **dadurch gekennzeichnet, dass**:
- das bekannte Ziel eine ein Signal aussendende Bake (2) ist, die von einem Flugzeug, das sich im Wesentlichen auf der Längsachse A einer Landebahn (3) befindet, in die Höhe H2 gebracht wird;
- das Radar (1) eine Empfangsantenne hat, die das von der Bake (2) ausgesendete Signal erfassen kann, wobei die Antenne in einer gegebenen lateralen Entfernung Dlat relativ zur Achse A angeordnet ist;
so dass, wenn die Bake (2) in der Entfernung Di über den Azimutwinkel θaz erfasst wird, die zweite Erfassungsphase über den Azimutwinkel θaz und über einen Höhenwinkel θEL entsprechend dem eines Objekts erfolgt, das sich auf der Achse A in der Höhe H2 befindet.

5. Verfahren nach Anspruch 4, **dadurch gekennzeichnet, dass** die Bake (2) ein kontinuierliches Signal mit einer gegebenen Frequenz aussendet.

6. Verfahren nach Anspruch 5, **dadurch gekennzeichnet, dass** eine Referenzemissionsbake, die ein Signal mit einer Frequenz aussendet, die sich von der des von der Bake (2) an Bord des Flugzeugs ausgesendeten unterscheidet, eine Kalibrierung der Antenne zulässt.

7. Verfahren nach Anspruch 6, **dadurch gekennzeichnet, dass** die Referenzemissionsbake wie folgt angeordnet ist:
- in der Höhe H2;
- in der lateralen Entfernung Dlat relativ zur Achse A;
- im Wesentlichen mit einer Position fluchtend, in der sich das Flugzeug mit der Bake (2) an Bord wahrscheinlich befindet.

8. Verfahren zum Verwenden eines im Wesentlichen in einer Höhe H1 angeordneten Radars (1) zum Orten einer ein Signal aussendenden Bake (2), die von einem Flugzeug, das sich im Wesentlichen auf der Längsachse A einer Landebahn (3) befindet, in eine gegebene Höhe H2 gebracht wird, in der Nähe von Zielen, die ebenfalls im Wesentlichen in der Höhe H2 angeordnet sind, wobei das Radar (1) eine Empfangsantenne hat, die das von der Bake (2) ausgesendete Signal erfassen kann, wobei die Antenne in einer gegebenen lateralen Entfernung Dlat relativ zur Achse A angeordnet ist, das Folgendes beinhaltet:
- eine erste Phase des Erfassens der Bake (2) durch Ausführen einer Azimutabtastung;
wobei das Verfahren **dadurch gekennzeichnet ist, dass** es Folgendes beinhaltet:
- wenn die Bake (2) in einer bestimmten Entfernung Di über einen bestimmten Azimutwinkel θaz erfasst wurde, eine zweite Erfassungsphase über den Azimutwinkel θaz und über einen Höhenwinkel θEL entsprechend dem eines Objekts, das sich auf der Achse A in der Höhe H2 befindet;
- wenn die Bake (2) in einer bestimmten Entfernung D über den Höhenwinkel θEL erfasst wird, dann wird die Position der Bake (2) als durch den Azimutwinkel θaz und die Entfernung D definiert angesehen, wenn die Entfernung D im Wesentlichen gleich der Entfernung Di ist.
